# EUROPEAN PATENT SPECIFICATION

(11) **EP 4 286 128 B1**
(45) Date of publication and mention of the grant of the patent: **09.10.2024**
(21) Application number: 23174837.7
(22) Date of filing: 23.05.2023
(51) Int. Cl.: B29B 13/02, B29B 13/06, F26B 3/06, F26B 3/14, F26B 17/12

(54) **APPARATUS AND METHOD FOR PROCESSING MATERIAL IN A HOPPER**
VORRICHTUNG UND VERFAHREN ZUR VERARBEITUNG VON MATERIAL IN EINEM TRICHTER
APPAREIL ET PROCÉDÉ DE TRAITEMENT DE MATÉRIAU DANS UNE TRÉMIE

(30) Priority: 31.05.2022 IT 202200011555
(43) Date of publication of application: 06.12.2023
(73) Proprietor: Piovan S.P.A., 30036 Santa Maria di Sala (VE) (IT)
(72) Inventor: BELLIO, Enrico, 31050 Ponzano V.to (IT); BORTOLOZZO, Marco, 30030 Salzano (VE) (IT)
(74) Representative: Luppi Intellectual Property S.r.l.

(56) References cited:
- CN-A- 108 973 003
- CN-A- 110 671 909
- CN-A- 111 589 792
- CN-A- 112 959 541
- DE-A1- 102006 024 126
- DE-A1- 4 234 696
- US-A1- 2009 090 019
- US-A1- 2021 387 380

## Description

### Background of the invention

The invention relates to an apparatus for processing material in a hopper, in particular for processing incoherent plastics, i.e. in the form of granules and/or microgranules and/or pellets and/or powder and/or flakes or the like.

Reference is made, in particular, to an apparatus and/or a method in which a process fluid (generally hot air) is introduced into a hopper to pass through incoherent material and is then extracted from the hopper.

Specifically, but not exclusively, the invention can be advantageously applied in the context of a plant for treating incoherent plastics, like, for example, a plant for dehumidifying and/or drying and/or crystallizing and/or packaging and/or conveying in a vacuum and/or under pressure the incoherent plastics. This plant may be intended, in particular, to supply a user machine, such as, for example, a machine for processing and transforming plastics, in particular an extruder that supplies extruded plastics to an injection moulding and/or blow moulding and/or compression moulding apparatus.

It is known that in the process of drying and/or dehumidifying polymer granules the latter are heated by creating a thermal gradient between the external surface and the central part of the granule. The drying and/or dehumidifying process has to be maintained in as stable condition as possible, such that all the dried and/or dehumidified polymer granules reach with constancy the same temperature and humidity conditions. This need is all the more evident the greater the mass of polymeric granular material to be heated.

Patent publication US 2009/090019 A1 shows an apparatus according to the preamble of claim 1.

Patent publication US 2021/0387380 A1 shows a solution intended to obtain a better distribution of thermal energy in the mass of the polymer granules and to reduce energy consumption. This solution diffuses the process fluid (hot air) inside a drying and/or dehumidifying hopper not only vertically (in general from bottom to top), but also horizontally. This combined mode involves the use of a great flowrate of the process fluid to ensure the transmission of the thermal energy to the granule. It has been established that this flowrate is about double the flowrate in a traditional process that uses a distributing cone that distributes in a vertical manner. Document CN108973003 discloses an apparatus having a similar structure as the apparatus claimed. However, instead of an outlet chamber, an inlet chamber is disclosed, the inlet chamber being connected to inlet nozzles extending into the internal volume.

This great flowrate nevertheless generates the drawback of clogging the filtering means of the process fluid, both during the step of loading the incoherent material into the hopper, and during the treatment step proper. This could be caused by the granules falling that are introduced from above into the hopper through a feeding port and/or by the high speed of the process fluid. An undesired granule conveying phenomenon has been detected of granules that "fly" to the outlet of the process fluid, thus creating in fact clogging of the filters. This conveying phenomenon is particularly intense in the initial step of filling the "empty" hopper when the fall distance of the granules is greater.

Another drawback, found in the solution known from US 2021/0387380 A1, is a certain imbalance in the transfer of the thermal energy into the volume of the hopper that contains the material. This heat imbalance could be caused by the formation of preferential routes in the process fluid inside the hopper. These preferential routes seem to be at least partially due to the aforesaid phenomenon of granules conveyed "in flight" by the process fluid, a phenomenon that causes localized decreases in load losses inside the hopper, generating in fact preferential routes with a high flow rate and a consequent increase in the phenomenon of conveying and clogging of the filters.

In one test, it was observed that during a stable process with 625 kg/h production and an airflow near 1800 m³/h, the quantity of material conveyed inside the containers of the filters was about 10kg in 24h.

### Summary of the invention

One object of the invention is to provide an apparatus and/or a method that is able to overcome the aforesaid limits and drawbacks of the prior art.

One object is to provide a solution, which is alternative to the prior art solutions, for processing incoherent plastics.

One advantage is to reduce the phenomenon of conveying the granule to a hopper and/or optimizing the distribution of the air inside the hopper.

One advantage is to limit the material conveyed "in flight" by the process fluid and reduce clogging of the filters of the fluid.

One advantage is to transmit thermal energy to the granule so as to homogenize the temperature of the granule and reduce the thermal gradient between the heart of the granule and the external surface thereof.

One advantage is to reduce or eliminate the powder deposit (coming from the granule) along the conduits evacuating the process fluid.

One advantage is to obtain high process efficiency, in particular of a process that involves heating material.

One advantage is to make available a constructionally simple and cheap apparatus for processing incoherent plastics.

These objects and advantages and still others are achieved by an apparatus and/or a method according to one or more of the claims set out below.

In one embodiment, a method for processing incoherent plastics with a process fluid comprises the step of generating a flow of the process fluid through the incoherent plastics contained in an internal volume of a container and the step of extracting the process fluid through at least one tubular portion, which is permeable to the process fluid, of at least one tubular body that is provided above with an opening that leads into an outlet chamber of the process fluid that is arranged above the internal volume and is separated from the internal volume by a diaphragm that is impermeable to the process fluid. The method may comprise the step of introducing the incoherent plastics into the internal volume through at least one inlet port separated from the outlet chamber by separating means that is impermeable to the process fluid.

In one embodiment, a method for processing incoherent plastics with a process fluid comprises the step of generating a flow of the process fluid through the incoherent plastics contained in an internal volume of a container and the step of extracting the process fluid through at least one tubular portion, which is permeable to the process fluid, of at least one tubular body that is provided above with an opening connected to an outlet of the process fluid, in which the aforesaid at least one tubular body may be, in particular, arranged eccentrically with respect to a vertical central longitudinal axis of the aforesaid container. It is possible to provide two or more tubular bodies, each comprising at least one tubular portion which is permeable to the process fluid and at least one upper opening connected to the outlet, arranged angularly spaced apart with respect to a vertical central longitudinal axis of the aforesaid container.

In this description, "permeable to the process fluid" means a means (for example a perforated wall) that lets the process fluid pass through and retains the incoherent material or at least the less fine particles.

In practice, the only escape route for the incoherent plastics to the outlet chamber consists of each of the aforesaid tubular portions that are permeable to the fluid that advantageously represent a significantly effective barrier against the undesired aspiration of incoherent plastics.

The possibility of providing a plurality of tubular bodies that are suitable for the transit of the exiting process fluid (tubular bodies immersed in the internal volume of the container of the incoherent plastics) enables the transit surface of the process fluid to be increased. It is further observed that the tubular bodies can be completely surrounded by the incoherent plastics, when the internal volume is sufficiently filled, so that flowing of the material contributes to keeping the surfaces of the tubular bodies clean by eliminating the depositing of powder. The eccentric arrangement with respect to a central axis of the container of one, two or more tubular bodies enables the material to be limited that is conveyed "in flight" by the process fluid and also obtains the advantage of reducing clogging of the filters by the material conveyed.

### Brief description of the drawings

The invention can be better understood and implemented with reference to the enclosed drawings that illustrate embodiments thereof by way of non-limiting example, in which:
Figure 1 is a vertical raised view of a first embodiment of an apparatus made in accordance with the invention;
Figure 2 is a vertical raised section view of an embodiment of a container (hopper) that is usable in the apparatus of Figure 1;
Figure 3 is a partial vertical raised section view of another embodiment of a container that is usable in the apparatus of Figure 1.

### Detailed description

For the sake of simplicity, in the appended figures similar elements of different embodiments are indicated by the same numbering.

With reference to the aforesaid figures, overall with 1 an apparatus has been indicated for processing incoherent plastics with a process fluid (for example heated air). The apparatus 1 comprises a container 2 extending vertically with an internal volume configured to contain the incoherent plastics. The container 2 may comprise, in particular, a drying and/or dehumidifying hopper for drying and/or dehumidifying incoherent plastics (polymer granules). The container 2 may comprise, in particular, a vertical central longitudinal axis.

The apparatus 1 may comprise, in particular, an outlet chamber 3 of the process fluid arranged above the internal volume containing the material. The outlet chamber 3 is provided with at least one outlet 4 of the process fluid. The outlet chamber 3 may be, in particular, separated from the internal volume, where the plastics are situated, by a diaphragm 5 (for example made of sheet metal) that is permeable to the process fluid. The diaphragm 5 is provided with one or more openings 6 to enable the process fluid to exit the internal volume.

The apparatus 1 comprises, for each of the aforesaid openings 6, a tubular body 7 extending below the diaphragm 5 and arranged inside the internal volume. Each tubular body 7 is open above at the respective opening 6 in the diaphragm 5. Each tubular body 7 may comprise, in particular, at least one segment 7a that is permeable to the process fluid. This segment 7a that is permeable to the fluid may comprise, in particular, a tubular segment, for example a perforated tubular wall. This segment 7a that is permeable enables the process fluid to exit the internal volume through the respective opening. This segment 7a that is permeable may be, in particular, arranged in the internal volume so as to be completely immersed and surrounded (at 360° degrees) by the incoherent plastics that are processed once the internal volume has been sufficiently filled with the material.

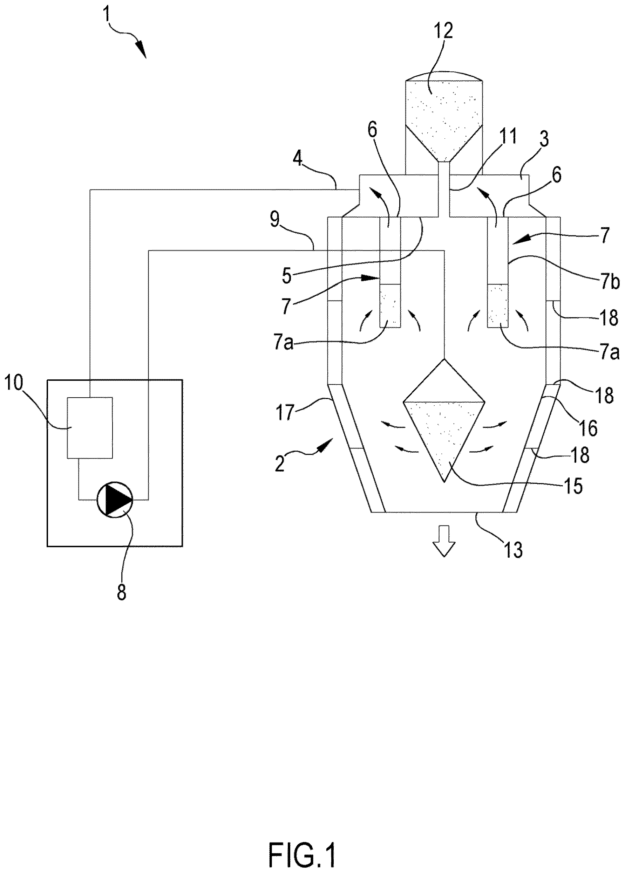

The apparatus 1 comprises means for generating a flow of the process fluid inside the internal volume to the outlet chamber 3. The means for generating a flow may comprise, in particular, at least one fan 8 to send the flow to an inlet 9 of the container 2. The means for generating a flow may comprise, in particular, at least one filter 10 for filtering the process fluid coming from the outlet 4 of the container. It is possible, as in the embodiment of Figure 1, for the apparatus 1 to comprise a closed circuit for the circulation of the process fluid. The fan 8 may operate in a closed circuit by removing the fluid from the outlet 4 and sending the fluid to the inlet 9. The apparatus 1 may comprise, in particular, regenerating means, for example of known type (not illustrated), to regenerate the fluid exiting the container 2. The regenerated fluid may be sent in a closed circuit to the inlet 9 by the fan 8.

The outlet chamber 3 may be, in particular, of annular shape. The outlet chamber 3 may be, in particular, internally bounded by a tubular wall 11 that is permeable to the process fluid. The tubular wall 11 may define, in particular, a passage for the entry of the incoherent plastics into the internal volume.

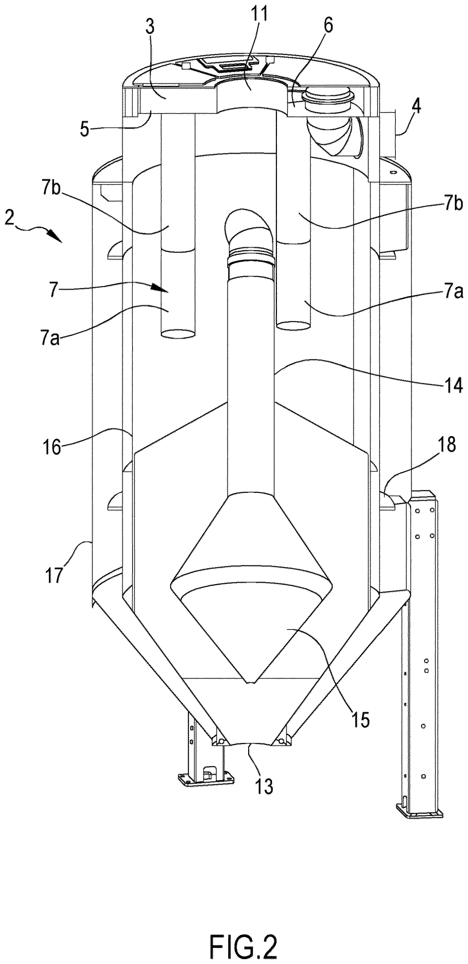

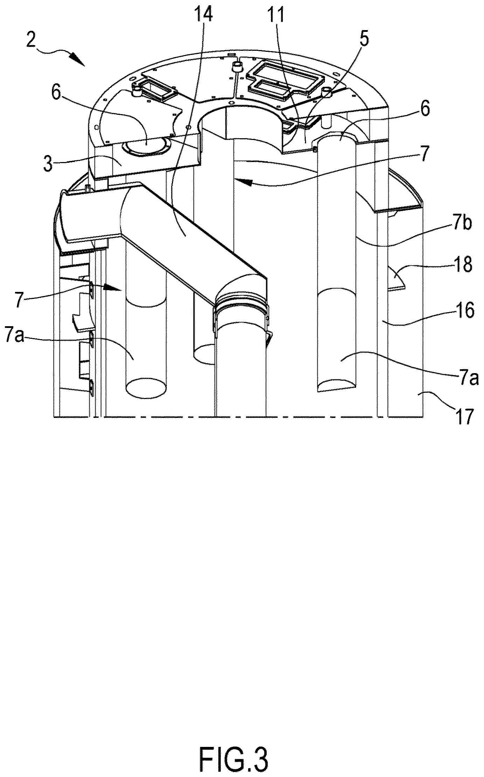

The apparatus 1 may comprise, in particular, a loader 12 for feeding the incoherent plastics to the internal volume through the tubular wall 11. It is possible, as in the embodiments in Figures 2 and 3, for the material supplied by the loader 12 to pass inside the tubular wall 11 remaining isolated from the flow of the process fluid that exits through the outlet chamber 3.

The apparatus 1 may comprise, in particular, a discharge 13 for the processed material to exit. The discharge 13 may comprise, in particular, an outlet port arranged at the lower end of the internal volume.

The diaphragm 5 may be, in particular, arranged radially around the tubular wall 11 starting from the tubular wall 11, so as to ensure substantial impermeability to the process fluid. The diaphragm 5 may comprise, in particular, a wall of annular shape with an edge inside a closed loop (for example, of circular shape) directly connected (substantially coincident with) to a lower end edge of the tubular wall 11.

The aforesaid passage for the entry of the material and the aforesaid outlet chamber 3 of the fluid may be, in particular, separated from one another by the tubular wall 11, so that the outlet chamber 3 is substantially isolated, almost hermetically, from the course of the incoherent plastics, apart from the fluid communication represented by the permeable segment/s 7a. This fluid communication is anyway conformed and arranged so as to constitute an effective barrier to reduce or eliminate the undesired transit of incoherent material.

Each tubular body 7 (for example of cylindrical shape) may, in particular, extend along a longitudinal (for example, vertical) axis not coinciding with a longitudinal axis (for example, vertical) along which the tubular wall 11 (for example of cylindrical shape) extends. The longitudinal axis of each tubular body 7 may be spaced apart from the longitudinal axis of the tubular wall 11. In particular, the tubular wall 11 may be arranged centrally with respect to a vertical central longitudinal axis of the container 2, or with respect to a center of gravity of the diaphragm 5, whereas each tubular body 7 may be arranged eccentrically with respect to the vertical central longitudinal axis of the container 2, or with respect to the center of gravity of the diaphragm 5.

The apparatus 1 may comprise, in particular, an inlet conduit 14 of the process fluid that is connected to the inlet 9 and is arranged in the internal volume and is permeable to the process fluid. The inlet conduit 14 may, in particular, terminate below with a permeable portion 15 (for example, perforated) that is arranged to enable the process fluid to enter the internal volume. The permeable portion 15 may be, in particular, arranged below each of the tubular bodies 7, in particular below the segments 7a that are permeable of the tubular bodies 7. The permeable portion 15 may comprise, in particular, a distributing cone.

The permeable portion 15 may be, in particular, arranged in a manner that is central or coaxial with respect to the vertical central longitudinal axis of the container 2. Each tubular body 7 may be, in particular, arranged in a manner that is eccentric or offset with respect to the permeable portion 15 and/or with respect to the vertical central longitudinal axis of the container 2. This eccentric or offset arrangement, together with the fact that the segment 7a that is permeable can be completely immersed and surrounded by the incoherent material, promotes the regularity and efficiency of the extraction of the process fluid from the internal volume of the container to the outlet 4.

The diaphragm 5 may be, in particular, provided with two, or three, or four, or five, or more than five openings 6, with each of which a respective tubular body 7 is associated. The openings 6 may be arranged, in particular, spaced angularly apart from one another around a vertical axis of the container 2.

As said, the tubular body 7 may comprise a segment 7a (lower and/or tubular) that is permeable to the process fluid to enable the transit thereof from the outside inside the tubular body 7. The tubular body 7 may comprise, in particular, an (upper or lower) segment 7b that is impermeable to the process fluid. The segment 7b that is impermeable may be arranged (for example coaxially) above the segment 7a that is permeable. The segment 7a that is permeable (perforated) may be of cylindrical shape. The segment 7b that is impermeable (unperforated) may be of cylindrical shape. The (upper) segment 7b that is impermeable may extend, in particular, between the respective (lower) segment 7a that is permeable and the respective opening 6 on the diaphragm 5. A vertical length of the (upper) segment 7b that is impermeable may be, in particular, greater than a vertical length of the respective (lower) segment 7a that is permeable.

The apparatus 1 may comprise, in particular, at least one perforated wall 16 which is permeable to the process fluid and arranged to bound laterally the internal volume and define an annular circulating zone of the process fluid. The apparatus 1 may comprise, in particular, at least one external wall 17 that is permeable to the process fluid to bound laterally and externally the aforesaid annular zone. The apparatus 1 may comprise, in particular, one or more septa 18 that are impermeable to the process fluid to divide the aforesaid annular zone into two or more compartments arranged one on top of the other. The aforesaid annular circulating zone of the process fluid promotes circulation with at least one component of the flow in a horizontal direction. The division into two or more compartments arranged one on top of the other promotes complex circulation in which the flow can enter and exit each compartment so as to be able to enter or exit each compartment so as to generate flow components in a horizontal direction radially outwards and several components of the flow in a horizontal direction radially inwards.

The operation of the apparatus may actuate, in particular, a method for processing incoherent plastics with a process fluid, in particular to dry and/or dehumidify incoherent plastics.

The method may comprise, in particular, the step of generating a flow of a process fluid through incoherent plastics contained in an internal volume of a container 2. The method may comprise, in particular, the step of extracting the process fluid from the internal volume through a tubular body 7 which is at least partially permeable (for example perforated) to the fluid and provided above with an opening 6 that leads into an outlet chamber 3 of the process fluid arranged above the internal volume and separated from the internal volume by a diaphragm 5 which is permeable to the process fluid.

The method may comprise, in particular, the step of extracting the process fluid through two or more tubular bodies 7 (each of which is at least partially permeable to the fluid) that are arranged angularly spaced apart from one another around a central vertical axis of the container 2. The process fluid may then be extracted, in particular, through two or more removal zones (in particular, tubular removal zones), i.e. through N removal zones, with N = 2, 3, 4, 5, 6, 7, 8, 9, 10 or more. The number N of removal zones may be chosen in function of the maximum flowrate of the process fluid and/or of the diameter/height ratio of the container 2 (hopper). The embodiments of Figs 2 and 3 differ from one another substantially through the number of removal or extraction zones for removing or extracting the process fluid, i.e. tubular bodies 7.

Inserting one or more extracting or removing zones for extracting or removing the process fluid with an eccentric arrangement with respect to the central vertical axis of the container 2, immersed inside the mass of the incoherent material, promotes the formation of a flow of the process fluid (hot air) so as to reduce the clogging of the filtering means with the incoherent material. It has been also seen that this arrangement that is eccentric and immersed in the material increases the efficiency of the process fluid, in particular for a flow that traverses the material in a complex manner with motion components in various horizontal directions and the motion component in a vertical direction.

## Claims

1. Apparatus for processing incoherent plastics with a process fluid, said apparatus (1) comprising:
- a container (2) extended vertically with an internal volume configured to contain the incoherent plastics;
- a process fluid outlet chamber (3) arranged above said internal volume and separated from said internal volume by a diaphragm (5) impermeable to the process fluid and provided with one or more openings (6) for the outlet of the process fluid from said internal volume;
- for each of said one or more openings (6), a tubular body (7) open at the top at the respective opening (6) and at least partially permeable to the process fluid so as to allow the process fluid to exit from said internal volume through the respective opening (6);
- a tubular wall (11) which is impermeable to the process fluid, and which defines a passage for the inlet of the incoherent plastics in said internal volume, said outlet chamber (3) being internally delimited by said tubular wall (11);
- means for generating a flow of the process fluid inside said internal volume towards said outlet chamber (3);
**characterized in that** said tubular body (7) extends below said diaphragm (5) inside said internal volume.

2. Apparatus according to claim 1, wherein said outlet chamber (3) is annular in shape, said passage and said outlet chamber (3) being separated from each other by said tubular wall (11).

3. Apparatus according to claim 2, wherein said diaphragm (5) extends around said tubular wall (11).

4. Apparatus according to claim 2 or 3, wherein said tubular body (7) extends along a longitudinal axis not coinciding with a longitudinal axis along which said tubular wall (11) extends.

5. Apparatus according to any one of the preceding claims, comprising an inlet conduit (14) for the process fluid arranged in said internal volume and impermeable to the process fluid, said inlet conduit (14) terminating at the bottom with a permeable portion (15) arranged to allow the process fluid to enter said internal volume.

6. Apparatus according to claim 5, wherein said permeable portion (15) is arranged below said tubular body (7).

7. Apparatus according to any one of the preceding claims, wherein said diaphragm (5) is provided with two, or three, or four, or five, or more than five openings (6), each of which is associated with a respective tubular body (7); said openings (6) being arranged, in particular, angularly spaced from each other around a vertical axis of said container (2).

8. Apparatus according to any one of the preceding claims, wherein said means for generating a flow comprises at least one fan (8) for sending the flow to an inlet (9) of said container (2) and/or at least one filter (10) to filter the process fluid coming from an outlet (4) of said container (2).

9. Apparatus according to any one of the preceding claims, wherein said tubular body (7) comprises a segment (7a) that is permeable to the process fluid to allow its passage from the outside to the inside of the tubular body (7) and a segment (7b) that is impermeable to the process fluid.

10. Apparatus according to claim 9, wherein said impermeable segment (7b) is arranged above the respective permeable segment (7a).

11. Apparatus according to claim 10, wherein said impermeable segment (7b) is interposed between the respective permeable segment (7a) and the respective opening (6) on said diaphragm (5).

12. Apparatus according to any one of the preceding claims, comprising at least one perforated wall (16) that is permeable to the process fluid and is arranged to laterally delimit said internal volume and to define an annular zone for the circulation of the process fluid, and at least one external wall (17) to delimit said annular zone laterally and externally.

13. Apparatus according to claim 12, comprising one or more septa (18) impermeable to the process fluid to divide said annular zone into two or more compartments arranged one above the other.

14. Apparatus according to any one of the preceding claims:
- said container (2) comprising at least one inlet (9) of a process fluid and at least one outlet (4) of the process fluid;
- **said** means for generating a flow of the process fluid from said at least one inlet (9) to said at least one outlet (4);
- two or more tubular bodies (7) arranged in said internal volume and angularly spaced relative to each other around a vertical axis of said container (2), each of said two or more tubular bodies (7) being provided with an upper opening (6) connected to said outlet (4), each of said two or more tubular bodies (7) being at least partly permeable to the process fluid to allow the process fluid to exit through the respective openings (6).

15. Method for processing incoherent plastics with a process fluid using the apparatus of claim 1, in particular for drying and/or dehumidifying incoherent plastics, said method comprising the step of generating a flow of a process fluid through incoherent plastics contained in an internal volume of a container (2), the step of introducing said incoherent plastics into said internal volume through a passage defined by a tubular wall (11) which is impermeable to the process fluid and which internally delimits an outlet chamber (3), and the step of extracting the process fluid from said internal volume through at least one tubular body (7) at least partially permeable to the process fluid and through an upper opening (6) of said tubular body (7 ) which flows into said outlet chamber (3) of the process fluid arranged above said internal volume, said outlet chamber (3) being separated from said internal volume by a diaphragm (5) that is impermeable to the process fluid.

## Patentansprüche

1. Vorrichtung zum Verarbeiten von inkohärenten Kunststoffen mit einem Prozessfluid, wobei die Vorrichtung (1) umfasst:
- einen vertikal erweiterten Behälter (2) mit einem Innenvolumen, das zur Aufnahme der unzusammenhängenden Kunststoffe konfiguriert ist;
- eine Prozessfluidauslasskammer (3), die oberhalb des Innenvolumens angeordnet und von dem Innenvolumen durch eine für das Prozessfluid undurchlässige Membran (5) getrennt ist und mit einer oder mehreren Öffnungen (6) für den Auslass des Prozessfluids aus dem Innenvolumen versehen ist;
- für jede der einen oder mehreren Öffnungen (6) einen röhrenförmigen Körper (7), der an der Oberseite der jeweiligen Öffnung (6) offen und für das Prozessfluid zumindest teilweise durchlässig ist, um so das Austreten des Prozessfluids aus dem inneren Volumen durch die jeweilige Öffnung (6) zu ermöglichen;
- eine röhrenförmige Wand (11), die für das Prozessfluid undurchlässig ist und die einen Durchgang für den Einlass des inkohärenten Kunststoffs in das innere Volumen definiert, wobei die Auslasskammer (3) innen durch die röhrenförmige Wand (11) begrenzt ist;
- Mittel zum Erzeugen einer Strömung des Prozessfluids innerhalb des Innenvolumens in Richtung der Auslasskammer (3);
**dadurch gekennzeichnet, dass** sich der röhrenförmige Körper (7) unterhalb der Membran (5) innerhalb des Innenvolumens erstreckt.

2. Vorrichtung nach Anspruch 1, wobei die Auslasskammer (3) ringförmig ist und der Durchgang und die Auslasskammer (3) durch die rohrförmige Wand (11) voneinander getrennt sind.

3. Vorrichtung nach Anspruch 2, wobei sich die Membran (5) um die röhrenförmige Wand (11) herum erstreckt.

4. Vorrichtung nach Anspruch 2 oder 3, wobei sich der röhrenförmige Körper (7) entlang einer Längsachse erstreckt, die nicht mit der Längsachse zusammenfällt, entlang der sich die röhrenförmige Wand (11) erstreckt.

5. Vorrichtung nach einem der vorhergehenden Ansprüche, die eine Einlassleitung (14) für das Prozessfluid umfasst, die in dem inneren Volumen angeordnet und für das Prozessfluid undurchlässig ist, wobei die Einlassleitung (14) an der Unterseite mit einem durchlässigen Abschnitt (15) endet, der so angeordnet ist, dass das Prozessfluid in das innere Volumen eintreten kann.

6. Vorrichtung nach Anspruch 5, wobei der durchlässige Abschnitt (15) unterhalb des röhrenförmigen Körpers (7) angeordnet ist.

7. Vorrichtung nach einem der vorhergehenden Ansprüche, wobei die Membran (5) mit zwei, drei, vier, fünf oder mehr als fünf Öffnungen (6) versehen ist, von denen jede einem entsprechenden röhrenförmigen Körper (7) zugeordnet ist; wobei die Öffnungen (6) insbesondere winkelmäßig um eine Hochachse des Behälters (2) herum zueinander beabstandet angeordnet sind.

8. Vorrichtung nach einem der vorhergehenden Ansprüche, wobei die Mittel zum Erzeugen einer Strömung mindestens einen Ventilator (8) zum Leiten der Strömung zu einem Einlass (9) des Behälters (2) und/oder mindestens einen Filter (10) zum Filtern der aus einem Auslass (4) des Behälters (2) kommenden Prozessflüssigkeit umfassen.

9. Vorrichtung nach einem der vorhergehenden Ansprüche, wobei der röhrenförmige Körper (7) ein Segment (7a) umfasst, das für das Prozessfluid durchlässig ist, um dessen Durchtritt von der Außenseite zur Innenseite des röhrenförmigen Körpers (7) zu ermöglichen, und ein Segment (7b), das für das Prozessfluid undurchlässig ist.

10. Vorrichtung nach Anspruch 9, wobei das undurchlässige Segment (7b) über dem jeweiligen durchlässigen Segment (7a) angeordnet ist.

11. Vorrichtung nach Anspruch 10, wobei das undurchlässige Segment (7b) zwischen dem entsprechenden durchlässigen Segment (7a) und der entsprechenden Öffnung (6) an der Membran (5) angeordnet ist.

12. Vorrichtung nach einem der vorhergehenden Ansprüche, die mindestens eine perforierte Wand (16) umfasst, die für das Prozessfluid durchlässig ist und so angeordnet ist, dass sie das innere Volumen seitlich abgrenzt und eine ringförmige Zone für die Zirkulation des Prozessfluids definiert, und mindestens eine Außenwand (17), die die ringförmige Zone seitlich und nach außen abgrenzt.

13. Vorrichtung nach Anspruch 12, die ein oder mehrere für das Prozessfluid undurchlässige Septen (18) umfasst, um die ringförmige Zone in zwei oder mehr übereinander angeordnete Kammern zu unterteilen.

14. Vorrichtung nach einem der vorhergehenden Ansprüche, wobei der Behälter (2) mindestens einen Einlass (9) für ein Prozessfluid und mindestens einen Auslass (4) für das Prozessfluid umfasst;
- die Mittel zum Erzeugen einer Strömung des Prozessfluids von dem mindestens einen Einlass (9) zu dem mindestens einen Auslass (4);
- zwei oder mehr röhrenförmige Körper (7), die in dem inneren Volumen angeordnet und in Winkelabständen zueinander um eine vertikale Achse des Behälters (2) angeordnet sind, wobei jeder der zwei oder mehr röhrenförmigen Körper (7) mit einer oberen Öffnung (6) versehen ist, die mit dem Auslass (4) verbunden ist, und wobei jeder der zwei oder mehr röhrenförmigen Körper (7) zumindest teilweise für das Prozessfluid durchlässig ist, um das Austreten des Prozessfluids durch die jeweiligen Öffnungen (6) zu ermöglichen.

15. Verfahren zum Verarbeiten von inkohärenten Kunststoffen mit einem Prozessfluid unter Verwendung der Vorrichtung nach Anspruch 1, insbesondere zum Trocknen und/oder Entfeuchten von inkohärenten Kunststoffen, wobei das Verfahren den Schritt des Erzeugens eines Flusses eines Prozessfluids durch inkohärente Kunststoffe umfasst, die in einem Innenvolumen eines Behälters (2) enthalten sind, den Schritt des Einführens der inkohärenten Kunststoffe in das Innenvolumen durch einen Durchgang, der durch eine röhrenförmige Wand (11) definiert ist, die für das Prozessfluid undurchlässig ist und die innen eine Auslasskammer (3) begrenzt, und den Schritt des Extrahierens des Prozessfluids aus dem Innenvolumen durch mindestens einen röhrenförmigen Körper (7), der für das Prozessfluid zumindest teilweise durchlässig ist, und durch eine obere Öffnung (6) des röhrenförmigen Körpers (7), die in die Auslasskammer (3) des Prozessfluids fließt, die über dem Innenvolumen angeordnet ist, wobei die Auslasskammer (3) von dem Innenvolumen durch eine Membran (5) getrennt ist, die für das Prozessfluid undurchlässig ist.

## Revendications

1. Appareil pour le traitement de matières plastiques incohérentes avec un fluide de traitement, ledit appareil (1) comprenant :
- un conteneur (2) étendu verticalement avec un volume interne conçu pour contenir les plastiques incohérents ;
- une chambre de sortie du fluide de traitement (3) disposée au-dessus dudit volume interne et séparée dudit volume interne par un diaphragme (5) imperméable au fluide de traitement et pourvue d'une ou plusieurs ouvertures (6) pour la sortie du fluide de traitement dudit volume interne ;
- pour chacune desdites une ou plusieurs ouvertures (6), un corps tubulaire (7) ouvert en haut au niveau de l'ouverture respective (6) et au moins partiellement perméable au fluide de traitement de manière à permettre au fluide de traitement de sortir dudit volume interne par l'ouverture respective (6) ;
- une paroi tubulaire (11) imperméable au fluide de traitement, qui définit un passage pour l'entrée des matières plastiques incohérentes dans ledit volume interne, ladite chambre de sortie (3) étant délimitée intérieurement par ladite paroi tubulaire (11) ;
- un moyen de génération d'un flux du fluide de traitement à l'intérieur dudit volume interne vers ladite chambre de sortie (3) ;
**caractérisé en ce que** le corps tubulaire (7) s'étend sous le diaphragme (5) à l'intérieur dudit volume interne.

2. Appareil selon la revendication 1, dans lequel ladite chambre de sortie (3) est de forme annulaire, ledit passage et ladite chambre de sortie (3) étant séparés l'un de l'autre par ladite paroi tubulaire (11).

3. Appareil selon la revendication 2, dans lequel ledit diaphragme (5) s'étend autour de ladite paroi tubulaire (11).

4. Appareil selon la revendication 2 ou 3, dans lequel ledit corps tubulaire (7) s'étend le long d'un axe longitudinal ne coïncidant pas avec un axe longitudinal le long duquel s'étend ladite paroi tubulaire (11).

5. Appareil selon l'une quelconque des revendications précédentes, comprenant un conduit d'entrée (14) du fluide de traitement disposé dans ledit volume interne et imperméable au fluide de traitement, ledit conduit d'entrée (14) se terminant au fond par une partie perméable (15) disposée de manière à permettre au fluide de traitement de pénétrer dans ledit volume interne.

6. Appareil selon la revendication 5, dans lequel ladite partie perméable (15) est disposée sous ledit corps tubulaire (7).

7. Appareil selon l'une quelconque des revendications précédentes, dans lequel ledit diaphragme (5) est pourvu de deux, ou trois, ou quatre, ou cinq, ou plus de cinq ouvertures (6), chacune étant associée à un corps tubulaire respectif (7) ; lesdites ouvertures (6) étant disposées, en particulier, à distance angulaire les unes des autres autour d'un axe vertical dudit conteneur (2).

8. Appareil selon l'une quelconque des revendications précédentes, dans lequel ledit moyen de génération d'un flux comprend au moins un ventilateur (8) pour envoyer le flux vers une entrée (9) dudit conteneur (2) et/ou au moins un filtre (10) pour filtrer le fluide de traitement provenant d'une sortie (4) dudit conteneur (2).

9. Appareil selon l'une quelconque des revendications précédentes, dans lequel ledit corps tubulaire (7) comprend un segment (7a) perméable au fluide de traitement pour permettre son passage de l'extérieur vers l'intérieur du corps tubulaire (7) et un segment (7b) imperméable au fluide de traitement.

10. Appareil selon la revendication 9, dans lequel ledit segment imperméable (7b) est disposé au-dessus du segment perméable respectif (7a).

11. Appareil selon la revendication 10, dans lequel ledit segment imperméable (7b) est interposé entre le segment perméable respectif (7a) et l'ouverture respective (6) sur ledit diaphragme (5).

12. Appareil selon l'une quelconque des revendications précédentes, comprenant au moins une paroi perforée (16) perméable au fluide de traitement et disposée pour délimiter latéralement ledit volume interne et pour définir une zone annulaire pour la circulation du fluide de traitement, et au moins une paroi externe (17) pour délimiter latéralement et extérieurement ladite zone annulaire.

13. Appareil selon la revendication 12, comprenant un ou plusieurs septa (18) imperméables au fluide de traitement pour diviser ladite zone annulaire en deux ou plusieurs compartiments disposés l'un au-dessus de l'autre.

14. Appareil selon l'une quelconque des revendications précédentes, ledit conteneur (2) comprenant au moins une entrée (9) d'un fluide de traitement et au moins une sortie (4) du fluide de traitement ;
- ledit moyen de génération d'un flux du fluide de traitement depuis ladite au moins une entrée (9) vers ladite au moins une sortie (4) ;
- deux ou plusieurs corps tubulaires (7) disposés dans ledit volume interne et espacés angulairement les uns par rapport aux autres autour d'un axe vertical dudit conteneur (2), chacun desdits deux ou plusieurs corps tubulaires (7) étant pourvu d'une ouverture supérieure (6) reliée à ladite sortie (4), chacun desdits deux ou plusieurs corps tubulaires (7) étant au moins partiellement perméable au fluide de traitement afin de permettre au fluide de traitement de s'échapper par les ouvertures respectives (6).

15. Procédé de traitement de matières plastiques incohérentes avec un fluide de traitement à l'aide de l'appareil selon la revendication 1, en particulier pour le séchage et/ou la déshumidification de matières plastiques incohérentes, ledit procédé comprenant l'étape consistant à générer un flux de fluide de traitement à travers des matières plastiques incohérentes contenues dans un volume interne d'un conteneur (2), l'étape consistant à introduire lesdites matières plastiques incohérentes dans ledit volume interne à travers un passage défini par une paroi tubulaire (11) imperméable au fluide de traitement et qui délimite intérieurement une chambre de sortie (3), et l'étape consistant à extraire le fluide de traitement dudit volume interne à travers au moins un corps tubulaire (7) au moins partiellement perméable au fluide de traitement et à travers une ouverture supérieure (6) dudit corps tubulaire (7) qui s'écoule dans ladite chambre de sortie (3) du fluide de traitement disposée au-dessus dudit volume interne, ladite chambre de sortie (3) étant séparée dudit volume interne par un diaphragme (5) qui est imperméable au fluide de traitement.
